# EUROPEAN PATENT APPLICATION

(11) **EP 1 662 356 A2**
(43) Date of publication of application: **31.05.2006**
(21) Application number: 05250903.1
(22) Date of filing: 17.02.2005
(51) Int. Cl.: G06F 1/00

(54) **Information leakage prevention method and apparatus and program for the same**

(30) Priority: 29.11.2004 JP 2004343822
(71) Applicant: FUJITSU LIMITED, Kawasaki-shi, Kanagawa 211-8588 (JP)
(72) Inventor: Miyamoto, Yuji, c/o Fujitsu Broad Solution, Shinagawa-ku Tokyo 141-8581 (JP); Hikita, Mikito, c/o Fujitsu Broad Solution, Shinagawa-ku Tokyo 141-8581 (JP); Zhou, Sijun, c/o Fujitsu Broad Solution, Shinagawa-ku Tokyo 141-8581 (JP); Tian, Yue, c/o Fujitsu Broad Solution, Shinagawa-ku Tokyo 141-8581 (JP)
(74) Representative: Hitching, Peter Matthew

(57) **Abstract**

An access right to a protected folder (31) is acquired, and when writing designated data contained in the protected folder (31) into a clipboard (22) provided within a main storage device (20), the data is encrypted by using an encryption key associated with the protected folder (31) and the encrypted data is written into the clipboard (22), while when pasting the encrypted data held in the clipboard (22) into a file stored within an auxiliary storage device (30), the encrypted data is decrypted and the decrypted data is pasted into the file. In this way, while retaining the convenience offered by the clipboard, it becomes possible to prevent the protected data from being taken outside the computer system via the clipboard.

## Description

The present invention relates to an information leakage prevention method, and an apparatus, for preventing confidential information from leaking outside a computer system, and a program for the same. More particularly, the invention relates to an information leakage prevention method and apparatus, and a program for the same wherein, while retaining the convenience of a clipboard, provisions are made to prevent file data, stored in a folder protected by encryption or another security means such as a "taking-out forbidden" means within a computer system, from being taken outside the computer system via the clipboard. Herein, the "taking-out forbidden" means typically forbids someone transmitting a file outside the computer system via the Internet, after copying it in the computer system.

For protection of data within a computer system, encryption techniques are generally employed. Of the encryption techniques, an encryption technique called automatic encryption is known which always encrypts file data when storing it in a file designated for protection, and which automatically decrypts the data only when accessed by an authenticated user for reading and automatically encrypts the data when writing it back, thereby always storing data in encrypted form within the computer system and not allowing any data to be saved in a decrypted plaintext form.

On the other hand, from the standpoint of preventing information leakage, a technique is disclosed in which identifiers (program names, process IDs, etc.) unique to the application programs (hereinafter simply referred to applications) that are permitted to access a protected folder are preregistered in a management file, and applications other than those preregistered in the management table are denied access to the protected folder.

A computer system having high security against the leakage of confidential information can be constructed by combining the above techniques.

In another known technique, special applications in which data transfer operations (operations such as "copy, "cut" and "paste") for transferring data between applications via a clipboard (shared memory area) are prohibited are specified as applications that can access a protected folder. According to this technique, leakage of confidential information can be prevented because data transfer operations via the clipboard are prohibited.

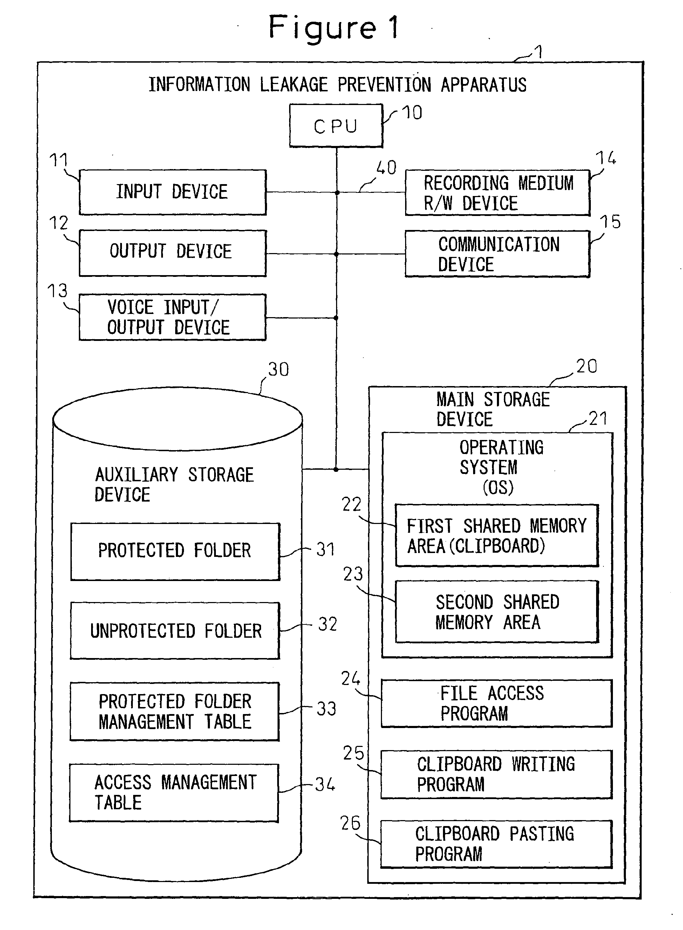

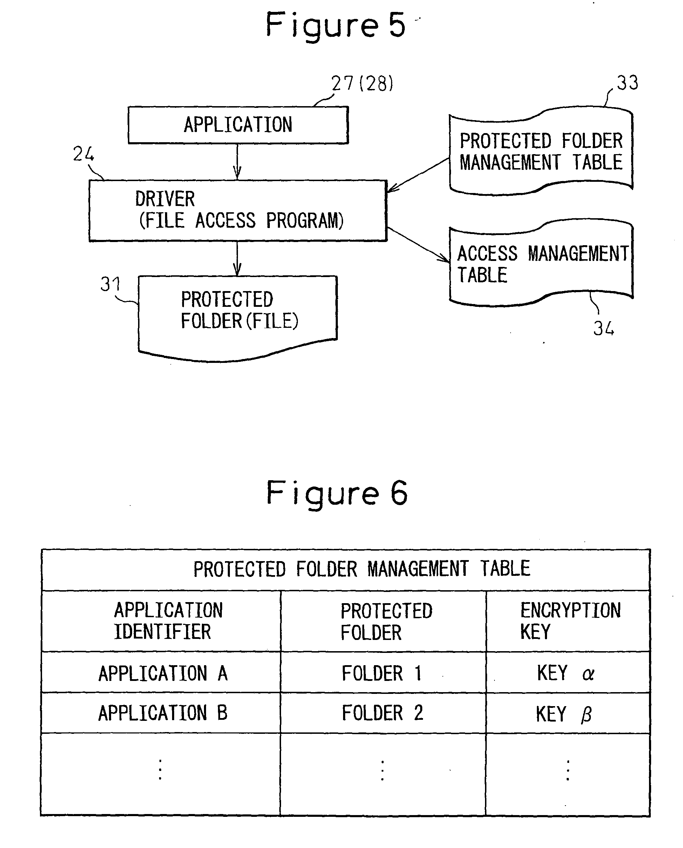

Further, in order that confidential files, that are forbidden to be taken outside a computer system, can be used-within the computer system together with other files not designated as confidential, Patent Document 1 discloses a technique in which, when an application opens a confidential file stored in a predesignated confidential folder, the transfer of the contents of the opened file is limited (the shared memory area is locked) so that the contents of the file will not be transferred outside the confidential folder, thereby preventing leakage of the confidential information (refer to paragraphs [0042] to [0045] and reference numeral 44 in [Figure 1] in Japanese Unexamined Patent Publication No. 2002-288030 (Patent Document 1),refer to [CLAIMS], paragraphs [0002] to [0007] and [0042] to [0045], [Figure 1] to [Figure 6], and [Means for Solution] in the abstract in the patent specification).

However, since applications generally have commands for performing data transfers between applications via the clipboard as standard functions, if the above operations performed via the clipboard are limited or prohibited, the convenience offered by the clipboard will be compromised. If, to ensure convenience, an application is registered as an application permitted to access the protected folder, it becomes possible to take any data in the protected folder outside the computer system by transferring the data from the registered application to an unregistered application via the clipboard, thus posing a problem in terms of security against information leakage.

It is desirable to solve the above problem, and in particular it is desirable to provide an information leakage prevention method, and apparatus and a program for the same, wherein, while retaining the convenience of a clipboard, provisions are made to prevent any data, stored in a folder protected by encryption or another security means such as a "taking-out forbidden" means within a computer system, from being taken outside the computer system via the clipboard. Herein, the "taking-out forbidden" means may forbid someone transmitting a file outside the computer system via the Internet, after copying it in the computer system.

One embodiment of a first aspect of the present invention can provide an information leakage prevention apparatus for preventing leakage of data contained in a protected folder stored within an auxiliary storage device, comprising: a writing unit which has an access right to the protected folder and which, when performing a write operation for writing designated data contained in the protected folder into a first shared memory area provided within a main storage device, encrypts the data by using an encryption key associated with the protected folder registered in a protected folder management table and writes the encrypted data into the first shared memory area; and a pasting unit which has an access right to the protected folder and which, when performing a paste operation for pasting the encrypted data held in the first shared memory area into a file stored within the auxiliary storage device, decrypts the encrypted data and pastes the decrypted data into the file.

In an embodiment of the above information leakage prevention apparatus, when performing the write operation, the writing unit writes an identifier associated with the encrypted data into a second shared memory area which is provided separately from the first shared memory area within the main storage device and, when performing the paste operation, if the identifier stored in the second shared memory area matches the identifier of the data currently held in the first shared memory area, the pasting unit decrypts the data and pastes the decrypted data into the file, but if the identifiers do not match, or if no identifier is stored in the second shared memory area, the pasting unit directly pastes the data into the file without decrypting the data.

In another embodiment, the above information leakage prevention apparatus comprises a bypass unit which does not have an access right to the protected folder and which, when writing data contained in an unprotected folder stored within the auxiliary storage device into the first shared memory area, writes the data into the first shared memory area without encrypting the data and, when pasting the data currently held in the first shared memory area into the file, directly pastes the data into the file without decrypting the data.

An embodiment of a second aspect of the present invention can provide an information leakage prevention method for preventing leakage of data contained in a protected folder stored within an auxiliary storage device, comprising: acquiring an access right to the protected folder; when writing designated data contained in the protected folder into a first shared memory area provided within a main storage device, encrypting the data by an encryption key associated with the protected folder registered in a protected folder management table and writing the encrypted data into the first shared memory area; and when pasting the encrypted data held in the first shared memory area into a file stored within the auxiliary storage device, decrypting the encrypted data and pasting the decrypted data into the file.

An embodiment of a third aspect of the present invention can provide an information leakage prevention program for preventing leakage of data contained in a protected folder stored within an auxiliary storage device, wherein the program causes a computer to execute the steps of: acquiring an access right to the protected folder; when writing designated data contained in the protected folder into a first shared memory area provided within a main storage device, encrypting the data by an encryption key associated with the protected folder registered in a protected folder management table and writing the encrypted data into the first shared memory area; and when pasting the encrypted data held in the first shared memory area into a file stored within the auxiliary storage device, decrypting the encrypted data and pasting the decrypted data into the file.

In an embodiment of the invention, the protected folder is stored within the auxiliary storage device and is accessible by a registered application, and any data contained in the protected folder is written in encrypted form into the first shared memory area (clipboard) provided within the main storage device; accordingly, if all the data stored in the main storage device is taken outside the computer system by passing through the first shared memory area, as the encrypted data cannot be decrypted by any other application than the registered application, the data cannot be deciphered and information leakage can thus be prevented.

In another embodiment of the invention, after the identifier of the encrypted data has been written into the second shared memory area, if unencrypted data having no identifier is written into the first shared memory area, and the identifier stored in the second shared memory area remains unchanged, the identifier associated with the data written into the first shared memory area is checked to see if it matches the identifier stored in the second shared memory area and thereby to verify whether the data written into the first shared memory area is the encrypted data corresponding thereto and, upon verification, the encrypted data is decrypted, thus ensuring the reliability of the decrypted data.

In another embodiment of the invention, while ensuring the convenience of the first shared memory area (clipboard) even for unregistered applications, provisions are made so that only the registered applications can encrypt and decrypt the data written to the clipboard; accordingly, if the encrypted data held in the clipboard is taken outside the computer system by an unregistered application, as the encrypted data cannot be decrypted, the data cannot be deciphered and information leakage can thus be prevented.

Reference will be made, by way of example, to the accompanying drawings in which:
Figure 1 is a block diagram showing the configuration of an information leakage prevention apparatus according to one embodiment of the present invention;
Figure 2A is a diagram showing the flow of data when a clipboard operation is performed by a registered application in which the operation is to write data stored on a hard disk to the clipboard;
Figure 2B is a diagram showing the flow of data when a clipboard operation is performed by a registered application in which the operation is to paste data held in the clipboard into a file on the hard disk;
Figure 3A is a diagram showing the flow of data when a clipboard operation is performed by an unregistered application in which the operation is to write data stored on the hard disk to the clipboard;
Figure 3B is a diagram showing the flow of data when a clipboard operation is performed by an unregistered application in which the operation is to paste data held in the clipboard into a file on the hard disk;
Figure 4A is a diagram showing the flow of data when a clipboard paste operation is performed by an unregistered application after data has been written to the clipboard by a registered application in which the operation is to write data stored on the hard disk to the clipboard by the registered application;
Figure 4B is a diagram showing the flow of data when a clipboard paste operation is performed by an unregistered application after data has been written to the clipboard by a registered application in which the operation is to paste data held in the clipboard into a file on the hard disk by the unregistered application;
Figure 5 is a block diagram showing the flow of processing for the registration of an application program when an access is made to a protected folder;
Figure 6 is a diagram showing a specific example of a protected folder management table;
Figure 7 is a diagram showing a specific example of an access management table;
Figure 8 is a flowchart illustrating the processing of a file access to a protected folder by an application program according to an embodiment of the invention;
Figure 9 is a flowchart illustrating the processing performed by a clipboard writing program according to an embodiment of the invention; and
Figure 10 is a flowchart illustrating the processing performed by a clipboard pasting program according to an embodiment of the invention.

Embodiments of the present invention will be described in detail below with reference to the accompanying drawings.

Figure 1 is a block diagram showing the configuration of an information leakage prevention apparatus according to one embodiment of the present invention. The information leakage prevention apparatus 1 of the present invention is constructed, for example, from a personal computer PC, and comprises: a CPU 10; an input device 11 such as a keyboard, mouse, or the like; an output device 12 such as a display unit, printer, or the like; a voice input/output device 13; a recording medium R/W device 14 which reads and writes programs and data on a recording medium such as a flexible disk (FD) or an optical disk CD (CD-ROM, CR-D, and CD-RW); a communication device 15 which transfers programs and data between the apparatus 1 and an external computer via a LAN or the Internet; a main storage device 20; and an auxiliary storage device 30. The CPU 10, the input device 11, the output device 12, the voice input/output device 13, the recording medium R/W device 14, the communication device 15, the main memory 20, and the hard disk HD 30 are interconnected via a bus line 40.

The main storage device (hereinafter referred to as the main memory) 20 comprises a RAM backed up by a battery, and is used as a temporary storage area for programs and data to be executed by the CPU 10, a work area for the CPU 10, and a storage area for fixed programs and data. The auxiliary storage device (hereinafter referred to as the hard disk HD) 30 comprises, for example, a magnetic disk, and permanently holds programs which are loaded into the RAM as needed.

When the CPU 10 is activated, an operating system (OS), which provides the basic functions shared by many applications, such as input/output functions and the management of the main memory 20 and hard disk 30, is loaded from the hard disk 20 into the main memory 20.

A first shared memory area (hereinafter referred to as the clipboard) 22 is provided within the OS 21 in the main memory 20. The clipboard 22 is a kind of shared memory area that is used by a plurality applications to exchange data, and is an area reserved in the main memory 20 to temporarily hold data on which an operation such as copy, cut, and paste has been performed under the control of the OS 21.

Also, a second shared memory area 23 is provided separately from the clipboard 22 within the OS 21, and when data contained in a protected folder is transferred to the clipboard 22 by a registered application, an identifier associated with the data is stored in the second shared memory area 23. The data is, for example, a block of text from a document, an image, a graphic, a voice message, or a program.

Further, a file access program 24 which operates when an access is made to a file stored within the hard disk HD 30, a clipboard writing program 25 which operates when an operation is initiated to write data stored on the hard disk HD 30 into the clipboard 22, and a clipboard pasting program 26 which operates when an operation is initiated to paste the data held in the clipboard 22 into a file stored within the hard disk HD 30, are loaded into the main memory 20 when the information leakage prevention apparatus 1 is put into operation.

In addition to the above applications, at least one application program is loaded into the main memory 20 when the user uses the application program. The application program is, for example, a word processor, a spreadsheet program, a web browser, an inventory management program, an image editing program, a CAD program, a music or voice related program, or a game program.

On the other hand, protected folders 31, unprotected folders 32, a protected folder management table 33, and an access management table 34 are stored within the hard disk 30. The protected folder management table 33 stores the identifiers of applications, the identifiers of the protected folders, and the identifiers of encryption keys used to encrypt data stored in the respective protected folders. The access management table 34 stores the identifiers of the applications and the identifiers of the corresponding protected folders.

The application programs are classified into two types, i.e., registered applications 27 registered in the protected folder management table 33 and unregistered applications 28 not registered therein, and are usually stored within the hard disk 30 and loaded into the main memory 20 when the user uses the applications.

Next, the basic configuration and operation of the information leakage prevention apparatus according to an embodiment of the present invention will be described below.

When an access is made to the protected folder 31 stored within the auxiliary storage device 30, the identifier (program name, process ID, etc.) of the accessing registered application 27 is registered with the access management table 34. When an operation ("copy", "cut", "paste") relating to the use of the first shared memory area (clipboard) 22 is performed by the registered application 27 registered with the access management table 34, the following first to third processing steps are performed.

First processing step: When writing to the clipboard 22 (a copy or cut operation to the clipboard), the data to be processed is encrypted using the encryption key associated with the protected folder 31 registered in the protected folder management table, and the encrypted data is written into the clipboard 22, while at the same time, the identifier (data handle name, data hash value, etc.) of the encrypted data is written into the second shared memory area 23 provided separately from the clipboard 22 within the main storage device 20.

Second processing step: When pasting from the clipboard 22 (a paste operation from the clipboard), if the identifier stored in the second shared memory area 23 matches the identifier of the data currently held in the clipboard 22, the data is decrypted and the decrypted data is pasted into the destination file stored within the auxiliary storage device 30. If they do not match, or if no identifier is stored in the second shared memory area 23, the encrypted data is directly pasted into the file without decrypting it.

Third processing step: When an operation relating to the use of the clipboard 22 is performed by an unregistered application 28 not registered in the access management table 34 where the registered applications 27 permitted to access the protected folders 31 are registered, no particular processing is performed, and the use of the clipboard 22 is permitted as usual. More specifically, when the unregistered application 28 selects data from within the unprotected folder 32 stored on the auxiliary storage device 30 and writes it to the first shared memory area 22, the data is directly written into it without encrypting the data; on the other hand, when pasting the encrypted data currently held in the first shared memory area 22 into the above file, the encrypted data is directly pasted into the file without decrypting it.

According to the first to third processing steps described above, if the data that the registered application 27 has written to the clipboard 22 by accessing the protected folder 31 is attempted to be taken out of the protected folder 31 via the clipboard 22 by using the unregistered application 28 which is not forbidden to perform operations relating to the use of the clipboard 22, the data can be taken out but cannot be deciphered since the data is encrypted. This allows the unregistered application 28 to access and use the clipboard 22, while preventing any data in the protected folder 31 protected by encryption or another security means such as "taking-out forbidden" from being taken out via the clipboard 22 which is a kind of shared memory area.

Further, according to the first to third processing steps described above, as the operations through the clipboard 22, i.e., data copying (moving) from a file in the unprotected folder 32 to a file in the protected folder 31 and data copying (moving) between files in the protected folder 31 as well as between files in the unprotected folder 32, can be performed as usual by the registered application 27, the convenience of the clipboard 22 offered to the registered application 27 is not lost.

Next, a description will be given of the flow of data in the information leakage prevention apparatus of an embodiment of the invention when a clipboard operation is performed.

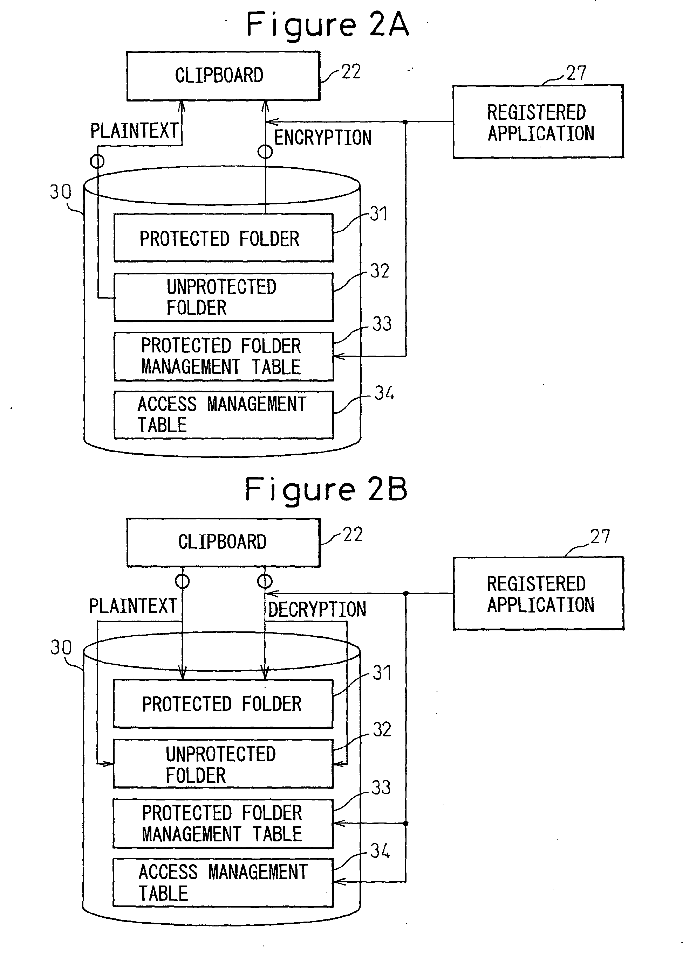

Figure 2A is a diagram showing the flow of data when a clipboard operation is performed by a registered application in which the operation is to write data stored on a hard disk to the clipboard, and Figure 2B is a diagram showing the flow of data when a clipboard operation is performed by a registered application in which the operation is to paste data held in the clipboard into a file on the hard disk. In Figures 2A, 2B, 3A, 3B, 4A and 4B hereinafter given, when writing protected data to the clipboard, the protected folder management table 33 is accessed and the protected data is encrypted by the encryption key associated with the protected folder 31 in which that data is stored, and when pasting the data held in the clipboard into the destination file on the hard disk, the protected folder management table 33 and the access management table 34 are accessed and the data is decrypted by the encryption key associated with the protected folder 31.

As shown in Figure 2A, when the registered application 27 selects data from within the protected folder 31 stored on the hard disk HD 30 and writes it to the clipboard 22, the data is encrypted and transferred to the clipboard 22 where the data is stored in the encrypted form; on the other hand, when data in the unprotected folder 32 stored on the HD 30 is selected for writing to the clipboard 22, the data selected from within the unprotected folder 32 is transferred in its original form to the clipboard 22 where the data is stored in plaintext form.

As shown in Figure 2B, when the registered application 27 pastes the encrypted data or the plaintext data held in the clipboard 22 into the destination file on the HD 30, the data is transferred after being decrypted in the case of the encrypted data, or in its original form in the case of the plaintext data, to the destination file that is currently accessed by the registered application 27 and stored in the protected folder 31 or the unprotected folder 32 on the HD 30, and the decrypted data or the plaintext data is stored there.

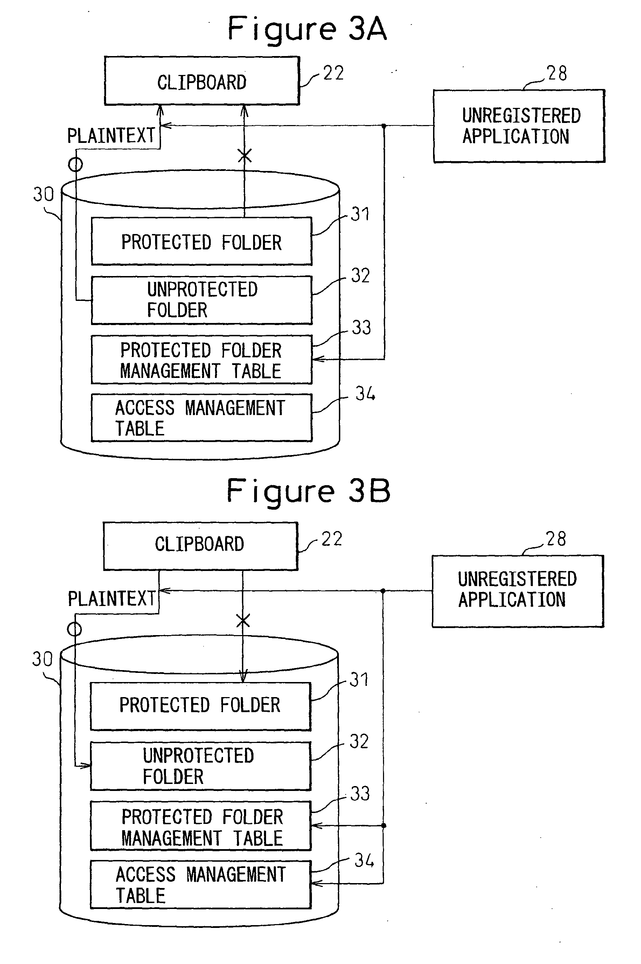

Figure 3A is a diagram showing the flow of data when a clipboard operation is performed by an unregistered application in which the operation is to write data stored on the hard disk to the clipboard, and Figure 3B is a diagram showing the flow of data when a clipboard operation is performed by an unregistered application in which the operation is to past data held in the clipboard into a file on the hard disk.

As shown in Figure 3A, when the unregistered application 28 selects data from within the unprotected folder 32 stored on the hard disk HD 30 and writes it to the clipboard 22, the data is transferred in its original form to the clipboard 22 where the data is stored in the plaintext form. Data in the protected folder 31 stored on the HD 30 cannot be written to the clipboard 22 by the unregistered application 28 because it does not have the right to access such data.

As shown in Figure 3B, when the unregistered application 28 pastes the plaintext data held in the clipboard 22 into the destination file on the HD 30, the plaintext data is transferred in its original form to the destination file on the HD 30 where the plaintext data is stored. The unregistered application 28 cannot paste the plaintext data held in the clipboard 22 into a file stored in the protected folder 31 on the HD 30 because it does not have the right to access such a file.

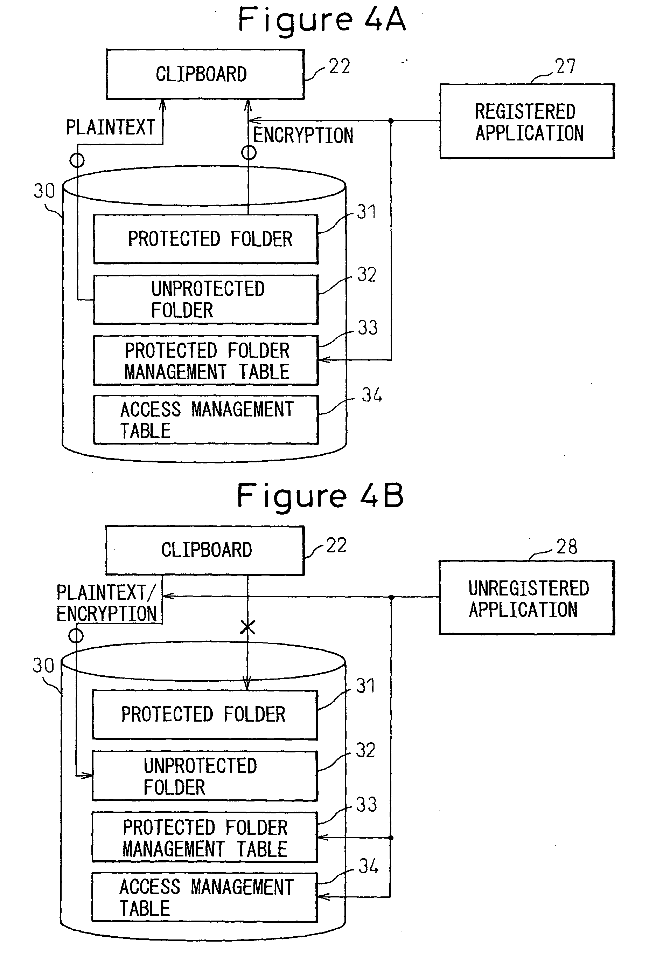

Figure 4A is a diagram showing the flow of data when a clipboard paste operation is performed by an unregistered application after data has been written to the clipboard by a registered application in which the operation is to write data stored on the hard disk to the clipboard by the registered application, and Figure 4B is a diagram showing the flow of data when a clipboard paste operation is performed by an unregistered application after data has been written to the clipboard by a registered application in which the operation is to paste data held in the clipboard into a file on the hard disk by the unregistered application.

As shown in Figure 4A, when the registered application 27 selects data from within the protected folder 31 stored on the hard disk HD 30 and writes it to the clipboard 22, the data is encrypted and transferred to the clipboard 22 where the data is stored in the encrypted form; on the other hand, when data in the unprotected folder 32 stored on the HD 30 is selected for writing to the clipboard 22, the data selected from within the unprotected folder 32 is transferred in its original form to the clipboard 22 where the data is stored in plaintext form.

As shown in Figure 4B, when the unregistered application 28 pastes the plaintext data held in the clipboard 22 into the destination file stored in the unprotected folder on the HD 30, the plaintext data is transferred in its original form to the destination file on the HD 30 where the plaintext data is stored; on the other hand, when pasting the encrypted data held in the clipboard 22 into the destination file on the HD 30, the encrypted data is not decrypted but is transferred in its original form to the file on the HD 30 where the encrypted data is stored. The unregistered application 28 cannot paste the plaintext data or encrypted data held in the clipboard 22 into a file stored in the protected folder 31, because it does not have the right to access such a file.

A description of how the data' flow shown in Figures 2A to 4B is controlled will be given below with reference to a flowchart.

Figure 5 is a block diagram showing the flow of processing for the registration of an application program when an access is made to the protected folder. The information leakage prevention apparatus according to the embodiment of the present invention is configured so that when the registered application 27 or the unregistered application 28 accesses a file on the hard disk HD 30, the file access program 24 which is a driver executed by the CPU 10 causes the OS 21 to wait the usual file access processing through the file system of the OS 21 and, after the file access program 24 has been executed for the file in the protected folder 31, the OS 21 performs the file access in the usual manner. The file access program 24 accesses the protected folder management table 33 to check whether the file is one stored in the protected folder 31 or not and, if the answer is YES, then registers the identifier of the application and the identifier of the protected folder with the access management table 34.

Further, when the application 27 or 28 writes data A contained in the file stored within the hard disk HD 30 into the clipboard 22, the clipboard writing program 25, which is a driver, causes the OS 21 to wait for the usual clipboard writing processing and, after the clipboard writing program 25 has been executed, the OS 21 writes the data A into the clipboard 22.

Likewise, when the application 27 or 28 pastes the data A held in the clipboard 22 into the destination file on the hard disk HD 30, the clipboard pasting program 26, which is a driver, causes the OS 21 to wait for the usual clipboard pasting processing and, after the clipboard pasting program 26 has been executed, the OS 21 pastes the data A from the clipboard 22 into the destination file.

More specifically, the file access program 24, the clipboard writing program 25, and the clipboard pasting program 26 are scheduled in advance so as to hook a call to file access, clipboard write, and clipboard paste, respectively. The processing of each of the file access program 24, the clipboard writing program 25, and the clipboard pasting program 26 will be described below with reference to a flowchart.

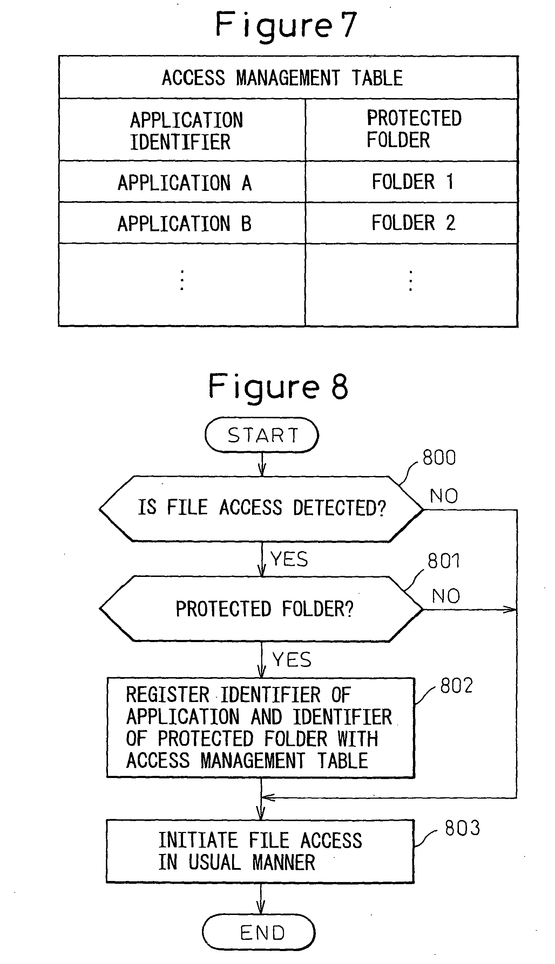

Figure 6 is a diagram showing a specific example of the protected folder management table, and Figure 7 is a diagram showing a specific example of the access management table. The identifiers of the applications, for example, handle names (applications A and B), the identifiers of the protected folders, for example, the management numbers of the folders (folders 1 and 2), and the identifiers of the encryption keys, for example, hash values (keys α and β), are preregistered in the protected folder management table 33.

When the application 27 or 28 requests an access to a file on the hard disk HD 30, the file access program 24 checks to see whether the requesting application is preregistered in the protected folder management table 33 shown in Figure 6 and, if it is preregistered, then registers the identifier of the application (application A or B) and the identifier of the protected folder (folder 1 or 2) with the access management table 34 shown in Figure 7.

Figure 8 is a flowchart illustrating the processing of a file access requested by an application program.

In step 800, it is determined whether the application 27 or 28 has made a call to the file system of the OS 21, and if the result of the determination is YES, the process proceeds to step 801; if NO, the process proceeds to step 803.

In step 801, the protected folder management table 33 constructed in advance is checked to see whether the file called by the application 27 or 28 is one stored in the protected folder 31, and if the result is YES, the process proceeds to step 802; if NO, the process proceeds to step 803.

In step 802, the identifier of the application, for example, its handle name, and the identifier of the protected folder, for example, the management number of the folder, are registered with the access management table 34, and the process proceeds to step 803.

In step 803, the usual file access is initiated. That is, the process reverts to the file access performed by the OS 21.

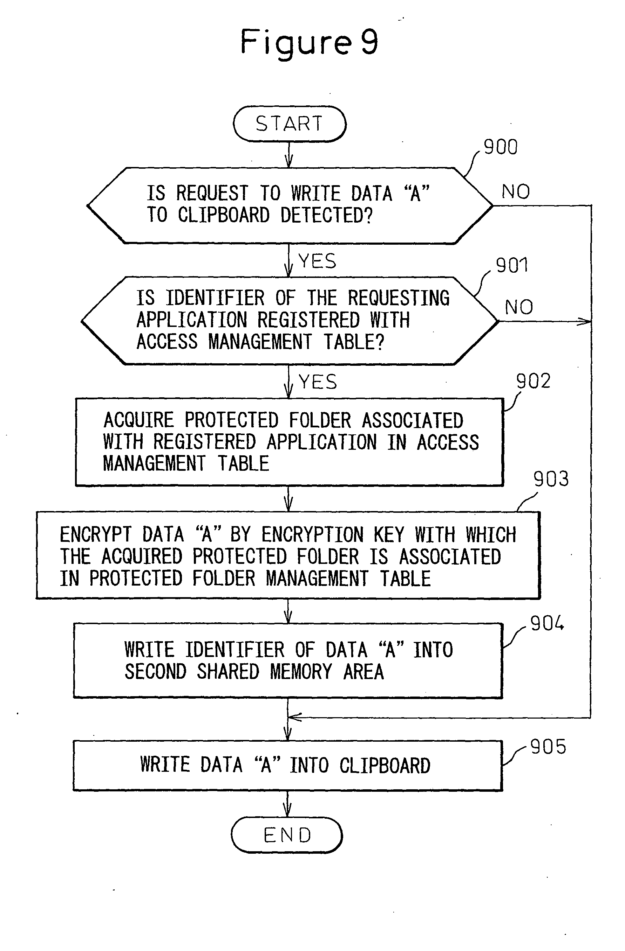

Figure 9 is a flowchart illustrating the processing performed by the clipboard writing program. The processing (steps 901 to 904) performed by the clipboard writing program corresponds to the previously described first processing step.

In step 900, it is determined whether the application 27 or 28 has made a request to write data, for example, data A, to the clipboard 22 of the OS 21, and if the result of the determination is YES, the process proceeds to step 901; if NO, the process proceeds to step 905.

In step 901, it is checked whether the identifier of the requesting application, for example, the identifier A of the registered application 27, is registered with the access management table 34, and if the result is YES, the process proceeds to step 902; if NO, the process proceeds to step 905.

In step 902, the protected folder 1 which is associated with the registered application 27 (application A) in the access management table 34 is acquired, and the process proceeds to step 903.

In step 903, the data A is encrypted by the encryption key α with which the protected folder 1 acquired in step 902 is associated in the protected folder management table 33, and the process proceeds to step 904.

In step 904, the identifier of the data A is written into the second shared memory area 23, and the process proceeds to step 905. Any symbol can be used as the identifier of the data A as long as it can identify the data A; for example, the name of the file in which the data A is stored or the date and/or the time at which it is written into the clipboard 22 can be used as the identifier.

In step 905, the data A is written into the clipboard 22 in the usual manner. That is, the process reverts to the clipboard writing by the OS 21. This step 905 corresponds to the previously described third processing step.

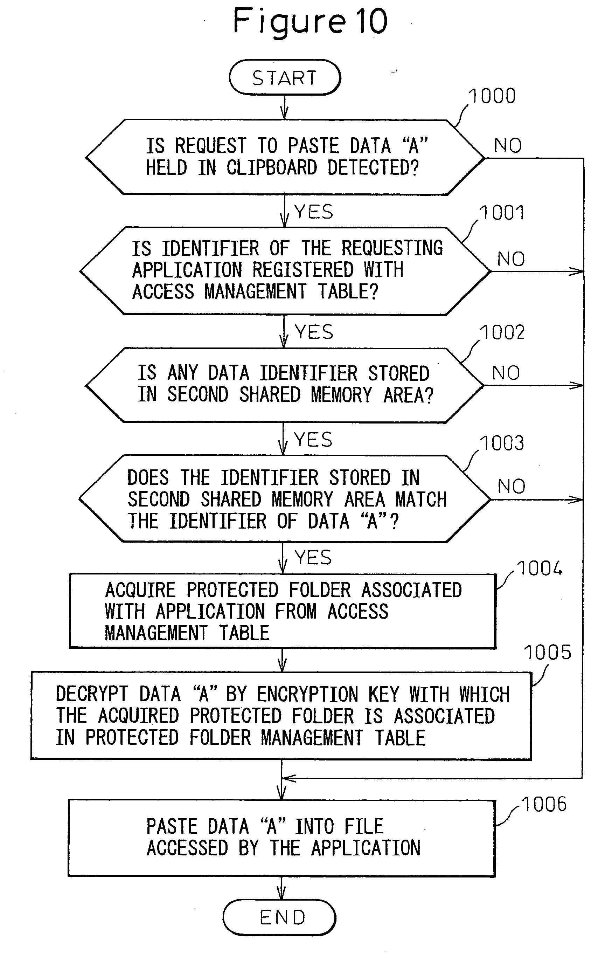

Figure 10 is a flowchart illustrating the processing performed by the clipboard pasting program. The processing (steps 1001 to 1005) performed by the clipboard pasting program corresponds to the previously described second processing step.

In step 1000, it is determined whether the application 27 or 28 has made a request to paste data, for example, data A, held in the clipboard 22 of the OS 21, and if the result of the determination is YES, the process proceeds to step 1001; if NO, the process proceeds to step 1006.

In step 1001, it is checked whether the identifier of the requesting application, for example, the identifier A of the registered application 27, is registered with the access management table 34, and if the result is YES, the process proceeds to step 1002; if NO, the process proceeds to step 1006.

In step 1002, it is checked whether the identifier of any data is stored in the second shared memory area 23, and if the result is YES, the process proceeds to step 1003; if NO, the process proceeds to step 1006.

In step 1003, it is checked whether the identifier stored in the second shared memory area 23 matches the identifier of the data A, and if the result is YES, the process proceeds to step 1004; if NO, the process proceeds to step 1006.

In step 1004, the protected folder 1 which is associated with the registered application 27 (application A) in the access management table 34 is acquired, and the process proceeds to step 1005.

In step 1005, the data A is decrypted by the encryption key α with which the protected folder 1 acquired in step 1004 is associated in the protected folder management table 33, and the process proceeds to step 1006.

In step 1006, the data A is pasted into the file accessed by the application A in the usual manner. That is, the process reverts to the clipboard pasting by the OS 21. This step 1006 corresponds to the previously described third processing step.

The reason for writing the identifier of the data written to the clipboard 22 into the second shared memory area 23 will be explained below.

The identifier of the data written to the clipboard 22 is written into the second shared memory area 23 (step 904) by the clipboard writing program 25 only for the case of protected data, that is, only when an access to the clipboard 22 has occurred from an application registered with the access management table 34 (YES in step 901). If the access to the clipboard 22 has occurred from an application not registered with the access management table 34 (NO in step 901), the write operation (step 904) is not performed.

Here, consider the case where a flag that merely indicates whether the data is encrypted data or not is stored in the second shared memory area 23; in this case, when an access to the clipboard 22 occurs from an application registered with the access management table 34, and the identifier of the encrypted data written to the clipboard 22 is written into the second shared memory area 23, the flag is set to 1, and thereafter, if an access to the clipboard 22 occurs from an application not registered with the access management table 34, and unprotected data is thus written into the clipboard 22, the flag stored in the second shared memory area 23 is not updated but remains at 1 indicating that the data is encrypted data, despite the fact that the data held in the clipboard 22 is unprotected plaintext data.

To prevent the above situation, the identifier of the data is written into the second shared memory area 23. In this case, when an access to the clipboard 22 occurs from an application not registered with the access management table 34, a situation can occur where the identifier stored in the second shared memory area 23 is not updated while the data held in the clipboard 22 is plaintext data but, as no identifier is attached to the data held in the clipboard 22, the data does not match the identifier stored in the second shared memory area 23; accordingly, whether the data held in the clipboard 22 is encrypted data or plaintext data can be determined by checking whether the identifier of the data held in the clipboard 22 matches the identifier stored in the second shared memory area 23.

It should be noted that in embodiments of the present invention, the described computer program may be carried by any suitable carrier medium such as a storage medium (e.g. floppy disk or CD Rom) or a signal. Such a carrier signal could be a signal downloaded via a communications network such as the Internet. The appended claims relating to embodiments employing a computer program should be interpreted as covering a computer program by itself or in any of the above-mentioned forms.

It will be appreciated by those skilled in the art that the invention has been described by way of example only, and that a variety of alternative approaches may be adopted without departing from the scope of the invention as defined by the appended claims.

## Claims

1. An information leakage prevention apparatus for preventing leakage of data contained in a protected folder stored within an auxiliary storage device, comprising:
a writing unit which has an access right to said protected folder and which, when performing a write operation for writing designated data contained in said protected folder into a first shared memory area provided within a main storage device, encrypts said data by using an encryption key associated with said protected folder registered in a protected folder management table and writes said encrypted data into said first shared memory area; and
a pasting unit which has an access right to said protected folder and which, when performing a paste operation for pasting said encrypted data held in said first shared memory area into a file stored within said auxiliary storage device, decrypts said encrypted data and pastes said decrypted data into said file.

2. An information leakage prevention apparatus as claimed in claim 1 wherein, when performing said write operation, said writing unit writes an identifier associated with said encrypted data into a second shared memory area which is provided separately from said first shared memory area within said main storage device, and
when performing said paste operation, if said identifier stored in said second shared memory area matches the identifier of said data currently held in said first shared memory area, said pasting unit decrypts said data and pastes said decrypted data into said file, but
if said identifiers do not match, or if no identifier is stored in said second shared memory area, said pasting unit directly pastes said encrypted data into said file without decrypting said encrypted data.

3. An information leakage prevention apparatus as claimed in claim 1 or 2, comprising a bypass unit which does not have an access right to said protected folder and which, when writing data contained in an unprotected folder stored within said auxiliary storage device into said first shared memory area, writes said data into said first shared memory area without encrypting said data and, when pasting said data currently held in said first shared memory area into said file, directly pastes said data into said file without decrypting said data.

4. An information leakage prevention method for preventing leakage of data contained in a protected folder stored within an auxiliary storage device, comprising:
acquiring an access right to said protected folder;
when writing designated data contained in said protected folder into a first shared memory area provided within a main storage device, encrypting said data by an encryption key associated with said protected folder registered in a protected folder management table and writing said encrypted data into said first shared memory area; and
when pasting said encrypted data held in said first shared memory area into a file stored within said auxiliary storage device, decrypting said encrypted data and pasting said decrypted data into said file.

5. An information leakage prevention method as claimed in claim 4 wherein, when writing said designated data in said first shared memory area, an identifier associated with said encrypted data is written into a second shared memory area which is provided separately from said first shared memory area within said main storage device, and
when pasting said encrypted data into a file stored within said auxiliary storage device, if said identifier stored in said second shared memory area matches the identifier of said data currently held in said first shared memory area, said data is decrypted and said decrypted data is pasted into said file, but
if said identifiers do not match, or if no identifier is stored in said second shared memory area, said data is directly pasted into said file without decrypting said data.

6. An information leakage prevention method as claimed in claim 4 or 5 wherein, when an application not registered in an access management table where an application permitted to access said protected folder is registered writes data contained in an unprotected folder stored within said auxiliary storage device into said first shared memory area, said data is directly written into said first shared memory area without encrypting said data, and
when pasting said data currently held in said first shared memory area into said file, said data is directly pasted into said file without decrypting said data.

7. An information leakage prevention program for preventing leakage of data contained in a protected folder stored within an auxiliary storage device, wherein said program causes a computer to execute the steps of:
acquiring an access right to said protected folder;
when writing designated data contained in said protected folder into a first shared memory area provided within a main storage device, encrypting said data by an encryption key associated with said protected folder registered in a protected folder management table and writing said encrypted data into said first shared memory area; and
when pasting said encrypted data held in said first shared memory area into a file stored within said auxiliary storage device, decrypting said encrypted data and pasting said decrypted data into said file.

8. An information leakage prevention program as claimed in claim 7, comprising the steps of:
when writing said designated data in said first shared memory area, writing an identifier associated with said encrypted data into a second shared memory area which is provided separately from said first shared memory area within said main storage device,
when pasting said encrypted data into a file stored within said auxiliary storage device, decrypting said data and pasting said decrypted data into said file if said identifier stored in said second shared memory area matches the identifier of said data currently held in said first shared memory area, and
directly pasting said data into said file without decrypting said data if said identifiers do not match or if no identifier is stored in said second shared memory area.

9. An information leakage prevention program as claimed in claim 7 or 8, comprising the steps of:
when an application not registered in an access management table, where an application permitted to access said protected folder is registered writes data contained in an unprotected folder stored within said auxiliary storage device into said first shared memory area, then directly writing said data into said first shared memory area without encrypting said data, and
when pasting said data currently held in said first shared memory area into said file, then directly pasting said data into said file without decrypting said data.
